(19) Europäisches Patentamt
European Patent Office
Office européen des brevets

(11) EP 1 594 247 A2

(12) **EUROPEAN PATENT APPLICATION**

(43) Date of publication:
**09.11.2005 Bulletin 2005/45**

(51) Int Cl.[7]: **H04L 1/18**

(21) Application number: **05009833.4**

(22) Date of filing: **04.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **06.05.2004 KR 2004032012**

(71) Applicant: **SAMSUNG ELECTRONICS CO., LTD.**
**Suwon-city, Gyeonggi-do (KR)**

(72) Inventors:
- **Kim, Young-Bum**
  **Yeongtong-gu Suwon-si Gyeonggi-do (KR)**
- **Lee, Ju-Ho**
  **Yeongtong-gu Suwon-si Gyeonggi-do (KR)**
- **Heo, Youn-Hyoung**
  **Yeongtong-gu Suwon-si Gyeonggi-do (KR)**
- **Cho, Joon-Young**
  **Yeongtong-gu Suwon-si Gyeonggi-do (KR)**
- **Kwak, Young-Jun**
  **Yeongtong-gu Suwon-si Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Method and apparatus for determining rate matching parameters for a transport channel in a mobile telecommunication system**

(57) Disclosed are a method and an apparatus for determining rate matching parameters for transport channels in mobile telecommunication system. The apparatus and method include determining first physical channel bit sizes usable in transmitting at least one first transport channel not supporting hybrid automatic repeat request (HARQ) and at least one second transport channel supporting the hybrid automatic repeat request, determining if there is at least one second physical channel bit size in the first physical channel bit sizes, the second physical channel bit size allowing transmission for a size of coded bits corresponding to the first transport channel and a size of coded bits corresponding to the second transport channel based on rate matching and puncturing, reducing the size of the coded bits corresponding to the second transport channel when the second physical channel bit size is not included in the first physical channel bit sizes, returning to the step of determining if there is at least one second physical channel bit size after the size of the coded bits corresponding to the second transport channel is reduced, and when there is at least one second physical channel bit size, selecting one second physical channel size based on at least one second physical channel bit size as a rate matching parameter for the first transport channel and the second transport channel.

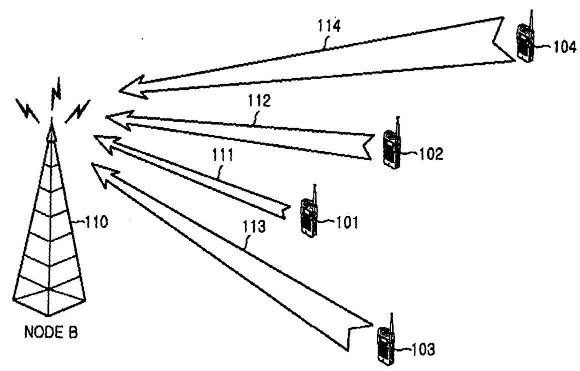


FIG.1

EP 1 594 247 A2

## Description

## BACKGROUND OF THE INVENTION

Field of the Invention:

The present invention relates to a code division multiple access (CDMA) communication system. More particularly, the present invention relates to a method and an apparatus for employing a hybrid automatic repeat request in an enhanced uplink dedicated transport channel.

Description of the Related Art:

The universal mobile telecommunication service (UMTS) system which is a 3rd generation mobile telecommunication system employing wideband code division multiple access (Wideband CDMA) based on the global system for mobile communication (GSM) and the general packet radio services (GPRS) (European telecommunication systems) provides consistent services in which users utilizing mobile phones or computers can transmit packet-based data, digitalized voice data, digitalized video data, and multimedia data at a high transmission rate of at least 2Mbps regardless of locations. The UMTS system employs the concept of virtual connection representing a packet-switched connection based on packet protocols such as the Internet protocol (IP) so as to always allow connection from any end point in a network.

Particularly, the UMTS system employs an enhanced uplink dedicated channel (EUDCH or E-DCH) such that the performance of packet transmission may be relatively improved in reverse link such as an uplink (UL) communication to a base station (BS) from a user equipment (UE). Herein, the E-DCH supports techniques such as adaptive modulation and coding (AMC), hybrid automatic repeat request (HARQ), and base station control scheduling in order to provide relatively stable data transmission having a high speed.

The AMC provides a technique for raising the efficiency of resource usage by determining a modulation scheme and a coding scheme for a data channel according to channel states between the UE and the BS. Herein, the combination of the modulation scheme and the coding scheme is referred to as a modulation and coding scheme (MCS), and a variety of MCS levels may be defined depending on supportable combinations of the modulation scheme and the coding scheme. The AMC adaptively determines a MC level according to channel states between the UE and the BS so as to raise the efficiency of resource usage.

The HARQ denotes a technique in which, when an initially-transmitted data packets are erroneous, data packets are re-transmitted in order to compensate for the erroneous data packets. The HARQ may be classified into a chase combining (CC) scheme for re-transmitting packets having the same formats as initially-transmitted packets when errors occur and an incremental redundancy (IR) scheme for re-transmitting packets having formats different from the formats of initially-transmitted packets when errors occur.

The base station control scheduling implies a scheme in which the BS determines an uplink data transmission state and the upper limit of possible data rates so as to transmit the determined information through a scheduling command to the UE, and the UE determines a possible data rate for an uplink E-DCH to be transmitted in consideration of the scheduling command when data are transmitted based on the E-DCH.

FIG. 1 illustrates uplink packet transmission through E-DCHs 111 to 114 in a conventional wireless communication system. Herein, reference numeral 110 represents a base station (i.e., Node B) supporting the E-DCHs 111 to 114, and reference numerals 101 to 104 represent UEs which are using the E-DCHs 111 to 114. As shown in FIG. 1, the UEs 101 to 104 transmit data to the Node B 110 through E-DCHs 111 to 114, respectively.

The Node B 110 informs each UE of a state in which E-DCH data can be transmitted based on information regarding channel conditions, transmission rates of requested data, and states of data buffers of the UEs 101 to 104 using the E-DCHs 111 to 114. In addition, the Node B 100 performs scheduling in order to control E-DCH data transmission rates. In the scheduling, the Node B 100 allocates high data transmission rates to UEs (e.g., UEs 101 and 102) close to the Node B 100 and low data transmission rates to UEs (e.g, UEs 103 and 104) far away from the Node B 100 while preventing a measurement noise rise value from exceeding a threshold value in order to improve overall system performance.

FIG. 2 is a message flowchart for illustrating a transmit/receive process through the E-DCH.

In step 202, a Node B establishes an E-DCH channel with a UE. Step 202 comprises a step of delivering messages through a dedicated transport channel. If the E-DCH channel has been established, the UE reports scheduling information to the Node B in step 204. The scheduling information includes uplink channel information regarding transmit power of the UE, remaining power enabling transmission by the UE, an amount of data (to be transmitted) stacked in a buffer of the UE.

The Node B having received scheduling information from a plurality of UEs (which are communicating with the Node B) monitors the scheduling information regarding the UEs in order to perform scheduling for data transmission of each UE in step 206. Specifically, the Node B determines the approval for uplink packet transmission by the UE and transmits scheduling assignment information to the UE in step 208. The scheduling assignment information includes information regarding allowed transmission timing and an allowed data transmission rate.

The UE determines uplink E-DCH transport formats (TFs) based on the scheduling assignment information in step 210 and transmits uplink packet data and the TF information through an E-DCH to the Node B in steps 212 and 214. Herein, the TF information comprises a transport format resource indicator (TFRI) indicating resource information required for demodulating E-DCH data. At this time, the UE selects an MCS level based on a data rate assigned by the Node B and a channel state and transmits the uplink packet data based on the selected MCS level in step 214.

In step 216, the Node B determines if the TF information and the packet data are erroneous. In step 218, through an ACK/NACK channel, the node B transmits NACK (Non-Acknowledge) information to the UE when at least one of the TF information and the packet data is erroneous as the determination result and transmits ACK (Acknowledge) information to the UE when both the TF information and the packet data have no errors. Herein, when the ACK information is transmitted, packet data transmission is completed and the UE sends new user data through the E-DCH. However, when the NACK information is transmitted, the UE retransmits packet data having the same contents through the E-DCH.

Similar to conventional DCHs, the E-DCH is matched with a single composite coded transport channel (CCTrCH) through transport channel multiplexing after rate matching in which repetition and puncturing are performed with respect to bits to be transmitted according to the number of bits that can be transmitted in a physical channel. In contrast, compared to other DCHs, the E-DCH supports a HARQ process performed in parallel. It is impossible to simply time-multiplex the E-DCH supporting HARQ employing both incremental redundancy (IR) and chase combining (CC) and the conventional DCH into a single CCTrCH because packets are transmitted with different bits each time they are retransmitted based on the HARQ IR. Therefore, it is necessary to distinguish dbetween rate matching patterns.

## SUMMARY OF THE INVENTION

Accordingly, the present invention has been made to solve the above-mentioned problems occurring in the prior art, and the present invention provides a method and an apparatus for time-multiplexing an enhanced uplink dedicated transport channel and a conventional dedicated transport channel into a single composite coded transport channel in a mobile telecommunication system.

The present invention provides a method and an apparatus for supporting hybrid automatic repeat request (HARQ) in an enhanced uplink dedicated transport channel while multiplexing the enhanced uplink dedicated transport channel and a conventional dedicated transport channel into a single composite coded transport channel.

The present invention provides a method and an apparatus for supporting hybrid automatic repeat request (HARQ) based on incremental redundancy (IR) in an enhanced uplink dedicated transport channel.

The present invention provides a method and an apparatus for determining rate matching parameters in an enhanced uplink dedicated transport channel such that the enhanced uplink dedicated transport channel may be time-multiplexed with a typical dedicated transport channel.

Preferably, there is provided a method for determining rate matching parameters for transport channels in a mobile telecommunication system. The method comprising the steps of determining first physical channel bit sizes usable in transmitting at least one first transport channel not supporting hybrid automatic repeat request (HARQ) and at least one second transport channel supporting the hybrid automatic repeat request, determining if there is at least one second physical channel bit size in the first physical channel bit sizes, the second physical channel bit size allowing transmission for a size of coded bits corresponding to the first transport channel and a size of coded bits corresponding to the second transport channel in consideration of rate matching and puncturing, reducing the size of the coded bits corresponding to the second transport channel when the second physical channel bit size is not included in the first physical channel bit sizes, returning to the step of determining if there is at least one second physical channel bit size after the size of the coded bits corresponding to the second transport channel is reduced, and when there is at least one second physical channel bit size, selecting one second physical channel size based on at least one second physical channel bit size as a rate matching parameter for the first transport channel and the second transport channel.

Preferably, there is provided an apparatus for determining rate matching parameters for transport channels in a mobile telecommunication system. The apparatus comprising a rate matching parameter determination unit for reducing a size of coded bits corresponding to a second transport channel until there is at least one second physical channel bit size in first physical channel sizes, wherein the first physical channel bit sizes are available for transmitting at least one first transport channel and at least one second transport channel, the first transport channel not supporting hybrid automatic repeat request (HARQ) and the second transport channel supporting the hybrid automatic repeat request, the second physical channel bit size allowing transmission for a size of coded bits corresponding to the first transport channel and the size of the coded bits corresponding to the second transport channel in consideration of rate matching and puncturing, and selecting one second physical bit size based on at least one second physical channel bit size as a rate matching parameter for the first transport channel and the second transport channel when there is at least one second physical channel bit size, and a device for performing rate matching or rate de-matching by using the rate matching parameter.

## BRIEF DESCRIPTION OF THE DRAWINGS

The above and other objects, features and advantages of the present invention will be more apparent from the following detailed description taken in conjunction with the accompanying drawings, in which:

FIG. 1 illustrates uplink packet transmission through enhanced uplink dedicated channels (E-DCHs) in a conventional wireless communication system;
FIG. 2 is a message flowchart for illustrating a conventional transmit/receive process through an E-DCH;
FIG. 3 is flowchart briefly illustrating an operation of determining rate matching parameters in a conventional dedicated transport channel;
FIG. 4 is a flowchart illustrating an operation of determining the number of physical channel bits according to an embodiment of the present invention;
FIG. 5 illustrates a block diagram for hybrid automatic repeat request (HARQ) rate matching according to an embodiment of the present invention;
FIG. 6 is a flowchart illustrating an operation of determining rate matching parameters for HARQ rate matching according to an embodiment of the present invention;
FIG. 7 illustrates a transmit operation according to an embodiment of the present invention;
FIG. 8 is a block diagram illustrating a structure of a transmitter of a user equipment (UE) according to an embodiment of the present invention; and
FIG. 9 is a block diagram illustrating a structure of a receiver of a Node B according to an embodiment of the present invention.

Throughout the drawings, the same or similar components in drawings are designated by the same reference numerals

## DETAILED DESCRIPTION OF AN EXEMPLARY EMBODIMENT

Hereinafter, an embodiment of the present invention will be described in detail with reference to the accompanying drawings. In the following description of the present invention, a detailed description of known functions and configurations incorporated herein will be omitted for conciseness. In addition, the following terminologies will be defined in consideration of functions of the present invention and may change depending on the intention or the usage of users or administrators. Accordingly, the following terminologies will be defined based on overall contents of the following description.

In the following description of the present invention, rate matching parameters for an enhanced transport channel are determined such that the enhanced transport channel supporting hybrid automatic repeat request (HARQ) may be time-multiplexed with another transport channel not supporting the HARQ in a mobile telecommunication system supporting the HARQ based on both chase combining (CC) and incremental redundancy (IR). Hereinafter, an enhanced uplink dedicated transport channel (E-DCH) of a UMTS communication system will be described in detail according to an embodiment of the present invention.

Prior to the description of the embodiment of the present invention, detailed operation of a Stop and Wait HARQ (SAW HARQ) scheme applied to the E-DCH will be described below. The SAW HARQ scheme additionally includes the following two schemes in order to improve the efficiency of a typical SAW ARQ scheme.

The first scheme denotes a scheme in which erroneous data are temporarily stored, and then, the data are combined with retransmission data corresponding to the erroneous data so that error rates may be reduced. This process is referred to as soft combining. The soft combining has two schemes of chase combining (CC) and incremental redundancy (IR).

In the CC, a transmit side employs packets having the same formats in initial transmission and retransmission. If one code block including m symbols is transmitted in the initial transmission, symbols having the same number m are also transmitted in the retransmission. In other words, the same coding rates are employed for the initial transmission and the retransmission. A receive side combines an initial transmitted code block with a retransmitted code block based on a bit so as to decode the combined blocks and determines based on the decoded blocks if errors occur.

In the IR, the transmit side employs packets having different formats in initial transmission and retransmission. When n-bit user data are changed into m symbols after passing through channel encoding, the transmit side transmits a code block including a portion of the m symbols in the initial transmission. When retransmission is required, code blocks including a portion of remaining symbols are sequentially transmitted. Accordingly, the initial transmission has a coding rate different from a coding rate of the retransmission. In the meantime, the received side provides a code block having a coding rate greater than coding rates of individually transmitted packets by concatenating the retransmitted symbols after the initially-transmitted symbols and then determines if errors occur by decoding the code block. In the IR, the initial transmission and each retransmission are distinguished based on version numbers. Specifically, the initial transmission, the first retransmission, and the second retransmission are labeled as version 1, version 2, and version 3, respectively. The receive side concatenates the initially transmitted code block bits and the retransmitted code block bits in exact order by using the version information.

In the second scheme employed for the SAW HARQ, which is different from the conventional SAW ARQ in which next packets cannot be transmitted until an ACK signal for a previously transmitted packet is received, a plurality of packets are continuously transmitted in a state in which the ACK signal is not received, thereby raising the efficiency of wireless link usage. Herein, UE establishes a plurality of logical HARQ channels with a Node B, identifies the channels based on specific time or a clarified channel number, and transmits packets through each channel. The receive side recognizes channels relating to packets received at a specific time point based on the identification information, rearranges the packets received through a plurality of HARQ channels in original sequence, and independently performs each HARQ process (e.g., soft combining) in each HARQ channel.

Hereinafter, rate matching in a conventional dedicated transport channel not supporting HARQ will be described.

The rate matching generally refers to an operation that bits in a transport block (a transmission unit on a transport channel) are punctured and repeated based on the size of bits in a physical frame (a transmission unit on a corresponding physical channel). The rate matching is performed through three steps including the determination of rate matching parameters, the determination of a rate matching pattern, and the execution of the rate matching.

In the determination of the rate matching parameters, the number of bits to be punctured or repeated is calculated based on the number of bits which can be transmitted through a physical channel, and the rate matching parameters for determining the rate matching pattern are determined based on the calculated number of the bits. In the determination of the rate matching pattern, the rate matching pattern showing positions of bits in the transport block to be punctured or repeated is determined based on the determined rate matching parameters. In the execution of the rate matching, a rate matching block is formed by puncturing or repeating bits of corresponding positions according to the rate matching pattern.

Hereinafter, detailed description about the rate matching in the conventional dedicated transport channel will be given with reference to FIG. 3. Herein, the rate matching parameters are determined by means of rate matching parameter determination units in both UE and a Node B by using identical input information.

Referring to FIG. 3, the rate matching parameter determination unit calculates spreading factors and the number of codes of a physical channel to be used by the UE in step 301. When an index of transport format combination (TFC) representing both the size of a transport block of each transport channel and the format of the transport channel is j, the rate matching parameter determination unit determines the number of bits which can be processed by the physical layer, $N_{data,j}$. Hereinafter, a detailed description about the operation in step 301 will be given.

First, possible $N_{data}$ values in the course of finding the $N_{data,j}$ are determined as {$N_{256}$, $N_{128}$, $N_{64}$, $N_{32}$, $N_{16}$, $N_8$, $N_4$, $2 \times N_4$, $3 \times N_4$, $4 \times N_4$, $5 \times N_4$, $6 \times N_4$} which is a set of the numbers of bits for spreading factors 256, 128, 64, 32, 16, 8, and 4. Referring to the $N_{data}$ values, only one code (i.e., one physical channel) is employed for each of the spreading factors 256, 128, 64, 32, 16, and 8. However, one code to six codes (one physical channel to six physical channels) may be employed for the spreading factor 4. For example, the $N_{16}$ denotes the number of possible physical channel bits when a spreading factor is equal to 16, and the '$6 \times N_4$' denotes the number of physical channel bits necessary for six physical channels when a spreading factor is equal to 4.

Next, SET 0 which is a sub-set of {$N_{256}$, $N_{128}$, $N_{64}$, $N_{32}$, $N_{16}$, $N_8$, $N_4$, $2 \times N_4$, $3 \times N_4$, $4 \times N_4$, $5 \times N_4$, $6 \times N_4$} is determined in order to find the $N_{data,j}$. The SET 0 represents combinations spreading factors and physical channel bit sizes. The SET 0 denotes the set of the numbers of physical channel bits allowed by the UMTS terrestrial radio access network (UMTS) and supported by UE according to the capability of the UE.

If the SET 0 is determined, SET 1 (which is a set including $N_{data}$ values satisfying Equation 1) is found based on the SET 0.

Equation 1

$$\left(\min_{1 \le y \le I}\left\{RM_y\right\}\right) \times N_{data} - \sum_{x=1}^{I}\left(RM_x \times N_{x,j}\right) \geq 0$$

Herein, the $RM_x$ denotes a rate matching attribute parameter corresponding to an $x^{th}$ TrCH (i.e., $TrCH_x$) and weight given for the $x^{th}$ TrCH. The I denotes the number of TrCHs to be multiplexed into one CCTrCH, and the $N_{x,j}$ denotes the number of coded bits included in a transport block of the $TrCH_x$ having the TFC j. Equation 1 is employed for preventing the occurrence of puncturing with respect to a TrCH having low weight.

If the SET 1 obtained through Equation 1 is not an empty set and an element having the minimum value from among elements of the SET 1 requires only one physical channel (PhCH), the element having the minimum value is determined as the $N_{data,j}$. If the SET 1 is an empty set and if the element having the minimum value requires at least two PhCHs, SET 2 (which is a set including $N_{data}$ values satisfying Equation 2) is found.

Equation 2

$$\left(\min_{1\le y\le I}\{RM_y\}\right)\times N_{data} - PL\times\sum_{x=1}^{I}\left(RM_x\times N_{x,j}\right)\ge 0$$

Herein, the PL (puncturing limit) denotes a preset ratio employed in order to avoid multi-code transmission and allows puncturing for a high spreading factor.

The rate matching parameter determination unit sorts elements of the SET 2 obtained as described above in ascending order, analyzes the elements, and finds an element which does not have the maximum value in the SET2 and require an additional PhCH. The rate matching parameter determination unit finally determines the found element as the $N_{data,j}$ denoting the number of physical channel bits. In other words, under inevitable puncturing conditions, the rate matching parameter determination unit determines the $N_{data,j}$ in such a manner that the number of bits punctured within the preset PL or multi-code transmission is minimized.

If the $N_{data,j}$ is determined in step 301, a spreading factor and the number of codes of a PhCH to be used by the UE are determined based on the $N_{data,j}$. Then, the rate matching parameter determination unit determines an amount of bits to be punctured or repeated through rate matching based on Equation 3 in step 302.

Equation 3

$$\Delta N_{i,j} = Z_{i,j} - Z_{i-1,j} - N_{i,j}, \text{ for all } i = 1, \dots I$$

$$Z_{0,j} = 0$$

$$Z_{i,j} = \left\lfloor \frac{\left(\sum_{m=1}^{i}\left(RM_m\times N_{m,j}\right)\times N_{data,j}\right)}{\sum_{m=1}^{I}\left(RM_m\times N_{m,j}\right)} \right\rfloor, \text{ for } i = 1, \dots I$$

In Equation 3, the $Z_{0,j}$ and the $Z_{i,j}$ denote parameters defined only in Equation 3, and the value of the $\lfloor\ \rfloor$ denotes the maximum integer value which does not exceed the internal value.

Herein, the $\Delta N_{i,j}$ denotes an amount of bits to be punctured or repeated in each frame of an $i^{th}$ transport channel (i.e., TrCH i) having the TFC j. In addition, if the sign of the $\Delta N_{i,j}$ is positive, the $\Delta N_{i,j}$ denotes an amount of bits to be repeated, and, if the sign of the $\Delta N_{i,j}$ is negative, the $\Delta N_{i,j}$ denotes an amount of bits to be punctured. The $N_{m,j}$ represents the number of bits of TrCH m having the TFC j before rate matching. In other words, the $N_{m,j}$ denotes the number of coded bits of the TrCH m.

In step 303, the rate matching parameter determination unit calculates a rate matching pattern based on the $\Delta N_{i,j}$. Herein, since detailed description about the calculation of the rate matching pattern is given in 3GPP TS25.212 which is incorporated herein by reference and has no direct concern with the present invention, the detailed description will be omitted.

As described above, in the conventional DCH not supporting the HARQ, the determination of the number of physical channel bits and the determination of the rate matching pattern are described. However, as described above, in the E-DCH supporting the HARQ based on IR, the number of E-DCH data bits may be more reduced in retransmission as compared with the number of E-DCH data bits in initial transmission which are different from the number of DCH data bits. Therefore, an operation of determining rate matching parameters, which enables multiplexing of the E-DCH supporting the HARQ and the DCH not supporting the HARQ, based on the HARQ characteristics is disclosed according to an embodiment of the present invention. Specifically, the number of physical channel bits (one of the rate matching parameters) is determined according to an embodiment of the present invention.

FIG. 4 is a flowchart illustrating the operation of determining the number of physical channel bits according to an embodiment of the present invention. Herein, the number of physical channel bits to be employed for the DCH and the E-DCH, $N_{data,j}$, is found. In other words, the $N_{data,j}$ denoting the total number of the transmittable bits in a physical layer during one frame in a case of the TFC j is found. Similarly, the operation of determining the number of physical channel bits is performed by the rate matching parameter determination unit for rate matchers of both the Node B and the UE.

Referring to FIG. 4, in step 401, the rate matching parameter determination unit determines SET 0 denoting a set of the number of physical channel bits which can be used by the UE, such as $\{N_{256}, N_{128}, N_{64}, N_{32}, N_{16}, N_8, N_4, 2 \times N_4, 3 \times N_4, 4 \times N_4, 5 \times N_4, 6 \times N_4\}$. The SET 0 may be determined through signaling from an upper layer when a call is established. Herein, elements belonging to the SET 0 are considered as $N_{data}$ values. In step 402, the rate matching parameter determination unit stores $M_{E,j}$ denoting the number of coded bits of the E-DCH having the TFC j as $N_{k,j}$ ( $N_{k,j} = M_{E,j}$). In this case, the E-DCH is regarded as DCH k employing a transport block having $N_{k,j}$ number of coded bits. In step 403, SET 1 is found by applying Equation 1 described above to the SET 0. Herein, the SET 1 denotes a set of the numbers of physical channel bits enabling rate matching while preventing puncturing.

In step 404, it is determined if the SET 1 is an empty set. If the SET 1 is an empty set, step 406 is performed, and, otherwise, step 405 is performed. In step 405, it is determined if the smallest element in the SET 1 (min SET 1) requires only one PhCH. If the smallest element requires only one PhCH, the smallest element is determined as the $N_{data,j}$ in step 413 ($N_{data,j}$ = min SET 1). However, if the smallest element requires at least two PhCHs, step 406 is performed.

In step 406, SET 2 denoting a set of $N_{data}$s satisfying Equation 2 described above in the SET 1 is found. The SET 2 represents a set of the numbers of physical channel bits allowing transport channel data even when puncturing is performed based on the preset PL. Herein, the maximum number of bits to be punctured is equal to (1-PL)*100.

In step 407, it is determined if the SET 2 is an empty set. If the SET 2 is an empty set, step 412 is performed. Otherwise, step 408 is performed. In step 408, the rate matching parameter determination unit sorts elements of the SET 2 in ascending order, sets the smallest element in the sorted SET 2 (min SET2) to an initial $N_{data}$ ($N_{data}$ = min SET2), and then performs step 409. In step 409, the rate matching parameter determination unit determines if the initial $N_{data}$ is the maximum value in the SET 2. Herein, the fact that the initial $N_{data}$ is the maximum value in the SET 2 refers to the initial $N_{data}$ being a unique element in the SET 2. If the initial $N_{data}$ is the maximum value, the rate matching parameter determination unit finally determines the initial $N_{data}$ as $N_{data,j}$ ($N_{data,j} = N_{data}$) in step 414. In contrast, if the initial $N_{data}$ is not the maximum value in the SET 2, the rate matching parameter determination unit performs step 410.

In step 410, the rate matching parameter determination unit determines if the next minimum element larger than the initial $N_{data}$ in the SET 2 having elements arranged in ascending order requires additional PhCHs. If the element having the next minimum value requires additional PhCHs, the rate matching parameter determination unit performs step 414 so as to employ the initial $N_{data}$ as the $N_{data,j}$ ($N_{data,j} = N_{data}$). In contrast, if the element having the next minimum value does not require additional PhCHs, the rate matching parameter determination unit determines the element having the next minimum value larger than the initial $N_{data}$ in the SET 2 sorted in ascending order as the initial $N_{data}$ in step 411 and returns to step 409.

The rate matching parameter determination unit reduces the amount of punctured bits while preventing the increase of the number of PhCH codes by repeatedly performing step 409 to step 411 until the $N_{data,j}$ is determined as described above.

Hereinafter, a case in which the SET 2 is an empty set in step 407 will be described. Herein, the fact that the SET 2 is an empty set refers to the number of physical channel bits allowing transmission within the PL does not exist in the SET 0 due to the excessive number of bits of E-DCH data. Therefore, it is impossible to multiplex the DCH and the E-DCH. Accordingly, the DCH and the E-DCH can be multiplexed with puncturing within the PL by reducing the number of bits of the E-DCH data. This is because only a portion of the bits of the E-DCH data can be transmitted based on necessity due to the support of the E-DCH for the HARQ IR. To this end, the rate matching parameter determination unit reduces the $N_{k,j}$ according to a preset rule in order to calculate new SET 1 and new SET 2 in step 412 and then returns to step 403. Herein, two schemes for reducing the $N_{k,j}$ are as follows.

In the first scheme, the $N_{k,j}$ is reduced based on Equation 4.

Equation 4

$$N_{k,j}' = \lfloor step_ratio \times N_{k,j} \rfloor$$

Herein, the $N_{k,j}'$ denotes reduced $N_{k,j}$. In other words, the $N_{k,j}$ is reduced at the preset ratio of the step_ratio. The step_ratio denotes a value previously agreed to between the Node B and the UE as a real number smaller than '1'.

In the second scheme, the $N_{k,j}$ is reduced based on Equation 5.

Equation 5

$$N_{k,j}' = N_{k,j} - step_size$$

In other words, the $N_{k,j}'$ is reduced by the step_size denoting the preset number of bits. Herein, the step_size implies a value previously agreed to between the Node Band the UE as an integer larger than '0'.

However, the reduced $N_{k,j}$ (i.e., $N_{k,j}'$) obtained through Equations 4 and 5 must satisfy Equation 6.

Equation 6

$$N_{k,j}' \geq \alpha \times M_{E,j}$$

Herein, the $\alpha$ denotes an update limit ratio allowed by a system as a real number smaller than '1'. Accordingly, the total ratio for reducing the $N_{k,j}$ cannot exceed the update limit ratio $\alpha$ allowed by a system. Therefore, restriction conditions such as Equation 6 prevent the excessive puncturing for E-DCH output bits and the excessive increase of the number of retransmission due to the excessive puncturing.

In step 403, the rate matching parameter determination unit sets new SET 1 by using the $N_{k,j}'$. In addition, if conditions in step 404 and 405 are not satisfied so that the operation for determining the number of physical channel bits may be performed up to step 406, the $N_{k,j}'$ is used for setting new SET 2.

The $N_{data,j}$ found through the steps is used for calculating $\Delta N_{k,j}$ denoting an amount of bits to be punctured or repeated in each TrCH through Equation 3 described above. The amount of bits to be punctured or repeated based on the $N_{k,j}$ is the $\Delta N_{k,j}$. In example, when the size of a transport block of the E-DCH transmittable on a physical channel is $N_{E,data,j}$, the $N_{E,data,j}$ is a sum of the $N_{k,j}$ and the $\Delta N_{k,j}$. Finally, an amount of bits to be punctured or repeated for the E-DCH becomes $\Delta M_{E,j}=N_{k,j}+\Delta N_{k,j}-M_{E,j}$.

If the amount of bits to be punctured or repeated in each TrCH is calculated through Equation 3, a rate matching pattern for the DCH is determined according to a conventional rate matching algorithm based on the calculated bit amount, and a rate matching pattern for the E-DCH is determined according to an HARQ rate matching algorithm based on the calculated bit amount. Hereinafter, the HARQ rate matching algorithm will be described.

When the size of E-DCH transport blocks transmittable on a physical channel (PhCH) is $N_{E,data,j}$, the $N_{E,data,j}$ is equal to a sum of the $N_{k,j}$ and the $\Delta N_{k,j}$. In addition, $\Delta M_{E,j}$ denoting an amount of bits to be punctured or repeated in the E-DCH is equal to $N_{E,data,j}-M_{E,j}$. Rate matching parameters required for the HARQ rate matching algorithm are the $N_{E,data,j}$, the $M_{E,j}$, and s and r (which are redundancy version parameters). The $N_{E,data,j}$ from among these parameters is calculated as described above. The parameter s indicates whether systematic bits of Turbo code output bits are prioritized (s =1) or not (s =0). The parameter *r* helps a value $e_{ini}$ used for a rate matching algorithm to be changed with respect to each HARQ transmission. The $e_{ini}$ denotes an initial value of a value e used in order to calculate an HARQ rate matching pattern. Herein, since a detailed description about the value of the e is given in 3GPP TS25.212 and has no direct concern with the present invention, the detailed description will be omitted.

FIG. 5 illustrates a block diagram for HARQ rate matching according to an embodiment of the present invention.

Input values of a HARQ matcher 500 are classified into systematic bits $N_{t,sys}$, first parity bits $N_{t,p1}$, and second parity bits $N_{t,p2}$. The input bit streams are rate-matched by means of corresponding rate matchers 501, 502, and 503. In other words, the rate matchers 501, 502, and 503 perform repetition or puncturing with respect to input bit streams and output bit streams $N_{t,sys}$, $N_{t,p1}$, and $N_{t,p2}$, respectively.

FIG. 6 is a flowchart illustrating the operation of determining the rate matching parameters for the HARQ rate matching according to an embodiment of the present invention. The operation is performed by the rate matching parameter determination units of both the Node B and the UE.

In step 601, the rate matching parameter determination unit determines the sign of the $\Delta M_{E,j}$ representing an amount of bits to be repeated or punctured in the E-DCH. If the sign is negative, the rate matching parameter determination unit determines to puncture the bits and performs step 602. If the sign is positive, the rate matching parameter determination unit determines to repeat the bits and performs step 607.

First, in the puncturing, the rate matching parameter determination unit performs step 602 so as to determine based on the RV parameter s if systematic bits are prioritized. If the systematic bits are prioritized (s = 1) as the determination result, the rate matching parameter determination unit finds in step 603 the size of output systematic bits output through HARQ rate matching when the systematic bits are prioritized. If the systematic bits are not prioritized (s = 0), the rate matching parameter determination unit finds in step 604 the size of systematic bits output through HARQ rate matching when the systematic bits are not prioritized. Thereafter, in step 605, the rate matching parameter determination unit calculates the sizes of first parity bits and second parity bits output through HARQ rate matching. Then, in step 606, the rate matching parameter determination unit finds the value $e_{ini}$ required for determining a rate matching pattern.

Similarly, in repetition, the rate matching parameter determination unit finds the size of systematic bits output through HARQ rate matching in step 607. In addition, the rate matching parameter determination unit calculates the sizes of first parity bits and second parity bits output through HARQ rate matching in step 608. Then, the rate matching parameter determination unit finds the value $e_{ini}$. in step 609.

Hereinafter, a method for determining rate matching parameters for the HARQ rate matching algorithm will be described by way of example. Herein, an HARQ second rate matching stage algorithm for the High Speed Downlink Packet Access (HSDPA) system will be described by way of example.

First, parameters employed for the HARQ second rate matching stage algorithm will be described.

Values $N_{sys}$, $N_{p1}$, and $N_{p2}$ denote the sizes of systematic bits, first parity bits, and second parity bits input for HARQ rate matching processes, respectively. Values $N_{t,sys}$, $N_{t,p1}$, and $N_{t,p2}$ denote the sizes of systematic bits, first parity bits, and second parity bits output after the HARQ rate matching processes, respectively. A value $X_i$ denotes a previously given value used for calculating a rate matching pattern of TrCH i. In addition, a value $e_{plus}$ denotes increment for the value e used for calculating a rate matching pattern, and a value $e_{minus}$ denotes decrement for the value e used for calculating a rate matching pattern in HARQ rate matching. A value $r_{max}$ denotes the maximum value of the RV parameter r.

According to an embodiment of the present invention, the $X_i$, $e_{plus}$, and $e_{minus}$ have values in Table 1.

Table 1

| | | | |
|---|---|---|---|
| Systematic RM S | $N_{sys}$ | $N_{sys}$ | $\|N_{sys}-N_{t,sys}\|$ |
| Parity 1 RM P1_2 | $N_{p1}$ | $2N_{p1}$ | $2\|N_{p1}-N_{t,p1}\|$ |
| Parity 2 RMP2_2 | $N_{p2}$ | $N_{p2}$ | $\|N_{p2}-N_{t,p2}\|$ |

This example will be described according to steps with reference to FIG. 6.

In step 601, the sign of the $\Delta M_{E,j}$ representing an amount of bits to be repeated or punctured in the E-DCH is detected. If the sign is negative, it is determined to puncture the bits. If the sign is positive, it is determined to repeat the bits. In step 602, if the systematic bits are prioritized based on the parameter s (*s*=1), the $N_{t,sys}$, which is the size of Turbo code systematic bits output after HARQ rate matching, is determined into the smaller value between the $N_{sys}$ and the $N_{E,data,j}$ based on Equation 7 in step 603.

Equation 7

$$N_{t,sys} = \min\{N_{SYS}, N_{E,data,j}\}$$

If the systematic bits are not prioritized (*s*=0), the $N_{t,sys}$, which is the size of systematic bits output after HARQ rate matching, is determined into the larger value between a value of $N_{E,dataj}-(N_{p1}+N_{p2})$ and zero based on Equation 8 in step 604

Equation 8

$$N_{t,sys} = \max\{N_{E,data,j} - (N_{p1} + N_{p2}),0\}$$

If the $N_{t,sys}$ is determined through Equation 7 or Equation 8, the $N_{p1}$ and the $N_{p2}$, which are the sizes of Turbo code parity bits output after HARQ rate matching, are obtained through Equation 9 in step 605.

Equation 9

$$N_{t,p1}=\left\lfloor\frac{N_{E,data,j}-N_{t,sys}}{2}\right\rfloor, N_{t,p2}=\left\lceil\frac{N_{E,data,j}-N_{t,sys}}{2}\right\rceil$$

Herein, the value in the $\lfloor\ \rfloor$ denotes the maximum integer value not exceeding an internal value.
After that, the $e_{ini}$ is obtained through Equation 10 in step 606.

Equation 10

$$e_{ini}(r) = \{(X_i - \lfloor r \cdot e_{plus} / r_{max}\rfloor - 1) \bmod e_{plus}\}+1$$

In the repetition, the $N_{t,sys}$ is determined through Equation 11 in step 607.

Equation 11

$$N_{t,p1}=\left\lfloor N_{sys}\cdot\frac{N_{E,data,j}}{N_{sys}+2N_{P1}}\right\rfloor$$

In step 608, similar to the puncturing, the $N_{p1}$ and the $N_{p2}$ are obtained through Equation 9. In step 609, the $e_{ini}$ is obtained through Equation 12.

Equation 12

$$e_{ini}(r) = \{(X_i - \lfloor (s + 2 \cdot r). e_{plus} /(2 \cdot r_{max})\rfloor - 1) \bmod e_{plus}\}+1$$

As described above, if the rate matching parameters for the HARQ rate matching have been determined, the rate matching parameter determination unit determines a rate matching pattern based on the determined parameters and provides the determined rate matching pattern to the rate matcher.
Hereinafter, the multiplexing of a DCH not supporting the HARQ and an E-DCH supporting the HARQ based on the CC and the IR into a single CCTrCH will be described in detail according to aN embodiment of the present invention. Herein, a DCH having a TTI of n*10 ms (n = 1, 2, 4, 8) and an E-DCH having a TTI of 10 ms are multiplexed into a single CCTrCH. The TTI denotes a transport time interval.
FIG. 7 illustrates a transmit operation according to an embodiment of the present invention. Herein, reference numerals 701 and 702 refer to steps of processing an E-DCH transport channel and a DCH transport channel, respectively.
Uncoded DCH data (i.e., a transport block) input in step 702 passes through cyclic redundancy check (CRC) attachment for error correction in step 704, is concatenated in order to reduce overheads through coding or segmented in order to reduce complexity due to the size of a code block in step 706, and is channel-coded in step 708.
If the coded DCH transport block has a size exceeding TTI of 10 ms, radio frame equalization, in which the coded DCH transport block is divided into frame blocks having the same size, is performed in step 709. Data frames output through the radio frame equalization in step 709 are interleaved with each other within one TTI in step 710, and then, the interleaved data is segmented based on a radio frame in step 711. In step 713, the segmented data pass through rate matching including puncturing or repetition according to a rate matching algorithm for the HSDPA system based on rate matching parameters determined according to an embodiment of the present invention described with reference to FIGs 4 and 6. The rate matched output data are delivered to step 714.
Similarly, uncoded E-DCH data input in step 701 (i.e., a transport block) passes through CRC attachment in step 703, is concatenated or segmented in step 705, is Turbo-coded in step 707, and then, is input to step 712 of performing the HARQ rate matching algorithm. In this embodiment, it is unnecessary to perform steps, such as radio frame segmentation/concatenation and interleaving, because the TTI of the E-DCH is fixed as 10ms. In step 712, rate matching is performed based on the HARQ second rate matching algorithm by using rate matching parameters determined according to an embodiment of the present invention described with reference to FIG. 4.

In step 714, the rate matched data are time-multiplexed. If there are at least two physical channels to be mapped to the multiplexed integration transport channel, the time-multiplexed data are segmented based on each physical channel in step 715, and the segmented data are interleaved on each physical channel in step 716. The data interleaved in step 716 are mapped to a physical channel (or physical channels) to be transmitted in step 717.

Hereinafter, a transmitter/receiver of the UE and the Node B will be described according to a preferred embodiment of the present invention.

FIG. 8 illustrates the structure of the transmitter of the UE according to an embodiment of the present invention. Herein, a transmit unit/receive unit for the High Speed Downlink Physical Control Channel (HS-DPCCH) required for transmitting ACK/NACK information, channel quality indicator (CQI) information, and a control signal necessary for E-DCH transmission is omitted for the purpose of description. In addition, it is assumed that one physical channel is used for DCH and E-DCH transmission.

Referring to FIG. 8, if DCH data and E-DCH data are input from upper layers, respectively, the data are rate-matched by a rate matcher 803 or 812 through a channel encoder 801 or 810. At this time, the DCH data are input to the rate matcher 803 through a radio frame equalizer /a first interleaver/ a radio frame segmentation unit 802 performing step 709 of FIG. 7 after passing through the channel encoder 801.

The E-DCH data are input to the rate matcher 812 through a HARQ controller 811 for HARQ. The HARQ controller 811 stores data which are not retransmitted by the maximum number of retransmissions and have no ACK/NACK response (reference numeral 823) in buffers 820, 821, and 822 used for processing HARQ in parallel. If the HARQ controller 811 receives the ACK from a receiver 824, the HARQ controller 811 empties a corresponding buffer and transmits new data. If the HARQ controller 811 receives the NACK, the HARQ controller 811 retransmits data in a corresponding buffer.

Rate matching parameters according to an embodiment of the present invention are determined by a rate matching parameter determination unit 813. The rate matching parameter determination unit 813 receives the TFC, the RM, the PL, the step_size (or step_ratio), etc., determines the $N_{data,j}$, which is the size of physical channel bits, through steps shown in FIG. 4, calculates the $\Delta N_{x,j}$ which is an amount of bits to be punctured or repeated for each transport channel according to the $N_{data,j}$, and determines a rate matching pattern for each transport channel by using the amount of the bits to be punctured or repeated. Each of the rate matchers 803 and 812 performs rate matching with respect to coded bits of a corresponding transport channel by using the rate matching pattern,

Data output from each of the rate matchers 803 and 812 are multiplexed into data of a single CCTrCH by the TrCH multiplexer 804 and than input to a physical channel mapping unit 830 through a physical channel segmenting unit 805 and a second interleaver 806. Herein, the physical channel segmenting unit 805 bypasses data output from the second interleaver 806 because this embodiment shows a structure in a case of employing one physical channel for the DCH transmission and the E-DCH transmission. Data output from the physical segmenting unit 805 are mapped to a Dedicated Physical Data Channel frame through the physical channel mapping unit 830.

The DPDCH frame is spread at a chip rate based on an Orthogonal Variable Spreading Factor (OVSF) code $c_d$ by means of a spreader 807 and then multiplied by a channel gain $\beta_d$ in a multiplier 808. Output data of the multiplier 808 are added to frames of another data channel by means of an adder 809 so that I-channel data may be formed. In addition to data transmission in the DPDCH, control information in a dedicated physical control channel (DPCCH) required for a receive operation in the DPDCH is spread at a chip rate based on an OVSF code $C_c$ by means of a spreader 815 and then is multiplied by a channel gain $\beta_c$ in a multiplier 816. Output data of the multiplier 816 are added to frames of another control channel by means of an adder 817 and then phase-converted by means of a multiplier 825 so that Q-channel data are formed.

An adder 818 adds received I-channel data to received Q-channel data so as to form one row of complex symbols and then delivers the row of the complex symbols to a scrambler 826. The scrambler 826 scrambles the row of the complex symbols by using a scrambling code $S_{dpch,n}$. The row of the scrambled complex symbols is converted into data in a pulse shape by means of a pulse shaping filter 827, is upward converted with respect to the frequency thereof by means of a radio frequency (RF) unit 828, and then delivered to a Node B through an antenna 829.

FIG. 9 illustrates a structure of a receiver of the Node B according to an embodiment of the present invention. In this embodiment, a receive channel estimator will be omitted for the purpose of description.

A RF signal received from an antenna 929 of the Node B is converted into a baseband signal by means of an RF unit 928, passes through a receive filter 927, is de-scrambled based on a scrambling code $S_{dpch,n}$ by means of a descrambler 926, and then is split into I/Q channel data by means of a de-multiplexer 917. The Q-channel data are phase-converted by means of a multiplier 925, multiplied by the OVSF code $C_c$ and de-spread by a de-spreader 915, and then formed as DPCCH data (reference numeral 914). The DPCCH data (reference numeral 914) includes TFC control information for DPDCH reception.

The I-channel data are multiplied by the OVSF code $C_d$ and de-spread by means of a de-spreader 907 and then delivered to a transport channel de-multiplexer 904 through a physical channel de-mapping unit 930, a second de-interleaver 906, and a physical channel concatenating unit 905. In FIG. 9, the physical channel concatenating unit does not operate because one physical channel is employed for the DCH data and the E-DCH data. The transport channel de-multiplexer 904 splits data from the physical channel concatenating unit 905 into the DCH data and the E-DCH data before outputting the data.

A rate matching parameter determination unit 913 determines the $N_{data,j}$ (the size of physical channel bits) through the steps shown in FIG. 4 by using parameters such as the TFC, the RM, the PL, and the step_size (or step_ratio) obtained from the DPCCH data (reference numeral 914) or an upper system, determines a rate matching pattern and the $\Delta N_{x,j}$ (an amount of bits to be punctured or repeated) with respect to each transport channel according to the determined $N_{data,j}$, and then provides the $\Delta N_{x,j}$ and the rate matching pattern to de-matchers 903 and 912.

The DCH data are de-matched by means of the rate de-matcher 903 according to the rate matching pattern provided from the rate matching parameter determination unit 913 and then decoded by means of a channel decoder 901 through a radio frame de-equalizer /a first de-interleaver/ a radio frame segmentation unit (902) corresponding to the unit 802 shown in FIG. 8.

In addition, the E-DCH data are rate de-matched by means of the rate de-matcher 912 and then decoded by means of a channel decoder 910 through an HARQ controller 911. Decoded data output from the channel decoder 910 are delivered to an ACK/NACK determination unit 918 and used in order to determine if errors occur. The HARQ controller 911 stores the decoded data in soft buffers 920, 921, 922 for corresponding HARQ channels if error occurs as the determination result. The soft buffers 920, 921, and 922 store erroneous data in order to soft-combine the erroneous data with next receive data. In this embodiment, although the soft buffers 920 to 922 are included in the Node B, the soft buffers 920 to 922 may be included in a remote network controller (RNC), which is an upper system of the Node B, according to system realization. The rate matching parameter determination unit 913 receives the TFC, the RM, the PL, the step_size (or the step_ratio) so as to determine the $N_{data,j}$, the $N_{E,data,j}$, and other rate matching parameters, determines a rate matching pattern according to the determined parameters, and then delivers the determined rate matching pattern to the rate de-matchers 903 and 912.

Hereinafter, an effect obtained in the present invention described above in detail will be briefly described.

According to an embodiment of the present invention, rate matching parameters, in particular, the size of physical channel bits and an amount of bits to

be punctured or repeated for rate matching in an E-DCH and a DCH are determined such that an E-DCH and a typical DCH may be multiplexed into a single CCTrCH in a communication system supporting the HARQ based on the CC and the IR in order to provide packet data services through an enhanced uplink dedicated transport channel. Accordingly, the E-DCH can be time-multiplexed with the typical DCH based on the conventional transport channel multiplexing technique.

While the invention has been shown and described with reference to a certain embodiment thereof, it will be understood by those skilled in the art that various changes in form and details may be made therein without departing from the spirit and scope of the invention. Consequently, the scope of the invention should not be limited to the embodiment, but should be defined by the appended claims and equivalents thereof.

## Claims

1. A method for determining rate matching parameters for transport channels in a mobile telecommunication system, the method comprising the steps of:

   determining first physical channel bit sizes usable in transmitting at least one first transport channel not supporting hybrid automatic repeat request (HARQ) and at least one second transport channel supporting the hybrid automatic repeat request;
   determining if there is at least one second physical channel bit size in the first physical channel bit sizes, the second physical channel bit size allowing transmission for a size of coded bits corresponding to the first transport channel and a size of coded bits corresponding to the second transport channel in consideration of rate matching and puncturing;
   reducing the size of the coded bits corresponding to the second transport channel when the second physical channel bit size is not included in the first physical channel bit sizes;
   returning to the step of determining if there is at least one second physical channel bit size after the size of the coded bits corresponding to the second transport channel is reduced ; and
   when there is at least one second physical channel bit size, selecting one second physical channel size based on at least one second physical channel bit size as a rate matching parameter for the first transport channel and the second transport channel.

2. The method as claimed in claim 1, wherein the step of determining if there is at least one second physical channel bit size comprises:

determining if there is at least one third physical channel bit size, the third physical channel bit size enabling rate matching while preventing puncturing with respect to the sizes of the coded bits corresponding to the first transport channel and the second transport channel;
when there is no third physical channel bit size, determining if there is at least one fourth physical channel bit size comprising a size of bits corresponding to the rate-matched first transport channel and the rate-matched second transport channel within preset puncturing limits ; and
when there is at least one fourth physical channel bit size, regarding at least one fourth physical channel bit size as at least second physical channel bit size.

**3.** The method as claimed in claim 2, further comprising:

when there is at least one third physical channel bit size, determining if a minimum value based on at least one third physical channel bit size requires only one physical channel;
when only one physical channel is required for the minimum value, selecting the minimum value as a rate matching parameter for the first transport channel and the second transport channel;
when a minimum value based on at least one fourth physical channel bit size requires at least two physical channels, determining if there is at least one fourth physical channel bit size including a size of bits corresponding to the rate-matched first transport channel and the rate-matched second transport channel within preset puncturing limit; and
when there is at least one fourth physical channel bit size, regarding at least one fourth physical channel bit size as at least second physical channel bit size.

**4.** The method as claimed in claim 2, wherein the step of determining if there is at least one third physical channel bit size comprises a step of determining if there are values of $N_{data}$s satisfying an equation,

$$\left(\min_{1\le y\le I}\{RM_y\}\right)\times N_{data}-\sum_{x=1}^{I}\left(RM_x\times N_{x,j}\right)\ge 0,$$

wherein the $RM_y$ and the $RM_x$ denote rate matching weight for a $y^{th}$ transport channel and an $x^{th}$ transport channel, respectively, the I denotes a total number of the transport channels, and the $N_{x,j}$ denotes a size of coded bits corresponding to an $x^{th}$ transport channel having $j^{th}$ transport format combination.

**5.** The method as claimed in claim 2, wherein the step of determining if there is at least one fourth physical channel bit size comprises a step of determining if there are values of $N_{data}$s satisfying an equation,

$$\left(\min_{1\le y\le I}\{RM_y\}\right)\times N_{data}-\sum_{x=1}^{I}\left(RM_x\times N_{x,j}\right)\ge 0,$$

wherein the $RM_y$ and the $RM_x$ denote rate matching weight for a $y^{th}$ transport channel and an $x^{th}$ transport channel, respectively, the I denotes a total number of the transport channels, the $N_{x,j}$ denotes a size of coded bits corresponding to an $x^{th}$ transport channel having $j^{th}$ transport format combination (TFC), and the PL denotes preset puncturing limit.

**6.** The method as claimed in claim 1, wherein, in the step of selecting one size based on at least one second physical channel bit size, a maximum value, which does not require additional physical channels, based on at least one second physical channel bit size is selected as the rate matching parameter.

**7.** The method as claimed in claim 1, wherein, in the step of reducing the size of the coded bits corresponding to the second transport channel, the size of the coded bits is reduced at a preset ratio.

**8.** The method as claimed in claim 1, wherein, in the step of reducing the size of the coded bits corresponding to the second transport channel, the size of the coded bits is reduced by a size of preset bits.

**9.** The method as claimed in claim 7, wherein the size of the coded bits corresponding to the second transport channel is reduced within a preset update limitative ratio.

**10.** The method as claimed in claim 8, wherein the size of the coded bits corresponding to the second transport channel is reduced within a preset update limitative ratio.

**11.** The method as claimed in claim 1, further comprising:

by using the size of the physical channel bits selected as the rate matching parameter, calculating an amount of bits to be punctured or repeated in each frame of the transport channels through an equation,

$$\Delta N_{i,j} = Z_{i,j} - Z_{i,1,j} - N_{i,j}, \text{ for all i = 1, ... I}$$

$$Z_{0,j} = 0$$

$$Z_{i,j} = \left\lfloor \frac{\left(\sum_{m=1}^{i}(RM_m \times N_{m,j}) \times N_{data,j}\right)}{\sum_{m=1}^{I}(RM_m \times N_{m,j})} \right\rfloor, \quad \text{for i = 1, ... I,}$$

wherein the $\Delta N_{i,j}$ denotes the amount of the bits to be punctured or repeated in each frame of an $i^{th}$ transport channel having $j^{th}$ transport format combination (TFC), the $N_{m,j}$ denotes a size of coded bits corresponding to an $m^{th}$ transport channel having the $j^{th}$ transport format combination, the $N_{data,j}$ denotes the selected size of the physical channel bits, and the $RM_m$ denotes preset rate matching weight of the $m^{th}$ transport channel, and the I denotes a total number of the transport channels; and

determining a rate matching pattern representing positions of the bits to be punctured or repeated according to the calculated amount of the bits.

**12.** An apparatus for determining rate matching parameters for transport channels in a mobile telecommunication system, the apparatus comprising:

a rate matching parameter determination unit for reducing a size of coded bits corresponding to a second transport channel until there is at least one second physical channel bit size in first physical channel sizes, wherein the first physical channel bit sizes are available for transmitting at least one first transport channel and at least one second transport channel, the first transport channel not supporting hybrid automatic repeat request (HARQ) and the second transport channel supporting the hybrid automatic repeat request, the second physical channel bit size allowing transmission for a size of coded bits corresponding to the first transport channel and the size of the coded bits corresponding to the second transport channel in consideration of rate matching and puncturing, and selecting one second physical bit size based on at least one second physical channel bit size as a rate matching parameter for the first transport channel and the second transport channel when there is at least one second physical channel bit size; and

a device for performing rate matching or rate de-matching by using the rate matching parameter.

**13.** The apparatus as claimed in claim 12, wherein the rate matching parameter determination unit determines if there is at least one third physical channel bit size, the third physical channel bit size enabling rate matching while preventing puncturing with respect to the sizes of the coded bits corresponding to the first transport channel and the second transport channel, determines if there is at least one fourth physical channel bit size including a size of bits corresponding to the rate-matched first transport channel and the rate-matched second transport channel within preset puncturing limit when there is no third physical channel bit size, and regards at least one fourth physical channel bit size as at least second physical channel bit size when there is at least one fourth physical channel bit size.

**14.** The apparatus as claimed in claim 13, wherein the rate matching parameter determination unit determinates if a minimum value based on at least one third physical channel bit size requires only one physical channel when there is at least one third physical channel bit size, selects the minimum value as a rate matching parameter for the first transport channel and the second transport channel when the minimum value requires only one physical channel, determines if there is at least one fourth physical channel bit size including a size of bits corresponding to the rate-matched first transport channel and the rate-matched second transport channel within preset puncturing limit when at least two physical channels are required for a minimum value based on at least one fourth physical channel bit size, and regards at least one fourth physical channel bit size as at least second physical channel bit size when there is at least one fourth physical channel bit size.

**15.** The apparatus as claimed in claim 13, wherein the rate matching parameter determination unit determines that values of $N_{data}$s satisfying an equation,

$$\left(\min_{1\le y\le I}\{RM_y\}\right)\times N_{data}-\sum_{x=1}^{I}\left(RM_x\times N_{x,j}\right)\ge 0,$$

include at least one third physical channel bit size, wherein the $RM_y$ and the $RM_x$ denote rate matching weight for a $y^{th}$ transport channel and an $x^{th}$ transport channel, respectively, the I denotes a total number of the transport channels, and the $N_{x,j}$ denotes a size of coded bits corresponding to an $x^{th}$ transport channel having $j^{th}$ transport format combination.

**16.** The apparatus as claimed in claim 13, wherein the rate matching parameter determination unit determines that values of $N_{data}$s satisfying an equation,

$$\left(\min_{1\le y\le I}\{RM_y\}\right)\times N_{data}-\sum_{x=1}^{I}\left(RM_x\times N_{x,j}\right)\ge 0\ ,$$

include at least one fourth physical channel bit size, wherein the $RM_y$ and the $RM_x$ denote rate matching weight for a $y^{th}$ transport channel and an $x^{th}$ transport channel, respectively, the I denotes a total number of the transport channels, the $N_{x,j}$ denotes a size of coded bits corresponding to an $x^{th}$ transport channel having $j^{th}$ transport format combination (TFC), and the PL denotes preset puncturing limit.

**17.** The apparatus as claimed in claim 12, wherein the rate matching parameter determination unit selects a maximum value, which does not require additional physical channels, based on at least one second physical channel bit size as the rate matching parameter.

**18.** The apparatus as claimed in claim 12, wherein the rate matching parameter determination unit reduces the size of the coded bits corresponding to the second transport channel at a preset ratio.

**19.** The apparatus as claimed in claim 12, wherein the rate matching parameter determination unit reduces the size of the coded bits corresponding to the second transport channel by a size of preset bits.

**20.** The apparatus as claimed in claim 18, wherein the rate matching parameter determination unit reduces the size of the coded bits corresponding to the second transport channel within a preset update limitative ratio.

**21.** The apparatus as claimed in claim 19, wherein the rate matching parameter determination unit reduces the size of the coded bits corresponding to the second transport channel within a preset update limitative ratio.

**22.** The apparatus as claimed in claim 12, wherein the rate matching parameter determination unit calculates an amount of bits to be punctured or repeated in each frame of the transport channels through an equation,

$$\Delta N_{i,j} = Z_{i,j} - Z_{i-1,j} - N_{i,j} \text{ for all i = 1, ... I}$$

$$Z_{0,j} = 0$$

$$Z_{i,j} = \left\lfloor \frac{\left( \sum_{m=1}^{i} \left( RM_m \times N_{m,j} \right) \times N_{data,j} \right)}{\sum_{m=1}^{I} \left( RM_m \times N_{m,j} \right)} \right\rfloor$$

for i = 1, ... I, by using the size of the physical channel bits selected as the rate matching parameter, wherein the $\Delta N_{i,j}$ denotes the amount of the bits to be punctured or repeated in each frame of an $i^{th}$ transport channel having $j^{th}$ transport format combination (TFC), the $N_{m,j}$ denotes a size of coded bits corresponding to an $m^{th}$ transport channel having the $j^{th}$ transport format combination, the $N_{data,j}$ denotes the selected size of the physical channel bits, and the $RM_m$ denotes preset rate matching weight of the $m^{th}$ transport channel, and the I denotes a total number of the transport channels and determines a rate matching pattern representing positions of the bits to be punctured or repeated according to the calculated amount of the bits.

**23.** A method for data transmission in a mobile communication system, the method comprising the steps of:

on a first transport channel not supporting hybrid automatic repeat request (HARQ)

channel coding data of the first transport channel;
rate matching the coded data of the first transport channel; on a second transport channel supporting HARQ
channel coding data of the second transport channel;
rate matching the coded data of the second transport channel;

multiplexing the rate matched data of the first transport channel and the rate matched data of the second transport channel;
mapping the multiplexed data to physical channel data; and
transmitting the physical channel data

wherein if there is no code channel set having a sufficient physical channel bit size to transmit the first transport channel and the second transport channel, and down sizing the data of the second transport channel.

**24.** The method of claim 23, wherein the code channel set represents combinations of spreading factors and physical channel bit sizes.

**25.** The method of claim 23, wherein the data of the second transport channel is down sized according to one of determined step size or step ratio.

**26.** A apparatus for data transmission in a mobile communication system, the apparatus comprising:

on a first transport channel not supporting hybrid automatic repeat request (HARQ)

a first channel coder for channel coding data of the first transport channel;
a first rate matcher for rate matching the coded data of first transport channel;

on a second transport channel supporting HARQ

a second channel coder for channel coding of the second transport channel;
a second channel coder for rate matching the coded data of second transport channel;

a multiplexer for multiplexing the rate matched data of the first transport channel and the rate matched data of the second transport channel;
a physical channel mapper for mapping the multiplexed data to physical channel data; and
a transmitter for transmitting the physical channel data

wherein if there is no code channel set having a sufficient physical channel bit size to transmit the first transport channel and the second transport channel, and down sizing the data of the second transport channel.

**27.** The apparatus of claim 26, wherein the code channel set represents combinations of spreading factors and physical channel bit sizes.

**28.** The apparatus of claim 26, wherein the data of the second transport channel is down sized according to one of determined step size or step ratio.

**29.** A method for receiving data in a mobile communication system, the method comprising the steps of:

receiving RF signal, and down converting the RF signal to base band signal;
de-multiplexing the base band signal to each code channel;
de-multiplexing said code channel data to a first transport channel not supporting hybrid automatic repeat request (HARQ) and a second transport channel supporting HARQ;
on the first transport channel

de-rate matching the de-multiplexed data of the first transport channel;
channel decoding the de-rate matched data of first transport channel;

on the second transport channel supporting HARQ, the data of the second transport channel being able to be down-sized, if there is no code channel set having a sufficient physical channel bit size to transmit the first transport channel and the second transport channel,

de-rate matching the de-multiplexed data of the second transport channel;
channel decoding the de-rate matched data of the second transport channel;

wherein if the second transport channel is retransmitted, and the de-rate matched data of the second transport channel is combined previous transmitted data of second transport channel.

**30.** The method of claim 29, wherein the code channel set represents combinations of spreading factors and physical channel bit sizes.

**31.** The method of claim 29, wherein the data of the second transport channel is down sized according to one of determined step size or step ratio.

**32.** A apparatus for receiving data in a mobile communication system, the apparatus comprising:

a receiver for receiving RF signal, and down converting the RF signal to base band signal;
a de-multiplexer for de-multiplexing the base band signal to each code channel;
a transport channel de-multiplexer for de-multiplexing said code channel data to a first transport channel not supporting hybrid automatic repeat request (HARQ) and a second transport channel supporting HARQ;
on the first transport channel

a first de-rate matcher for de-rate matching the de-multiplexed data of the first transport channel;
a first channel decoder for channel decoding the de-rate matched data of first transport channel;

on the second transport channel supporting HARQ, the data of the second transport channel being able to be down-sized, if there is no code channel set having a sufficient physical channel bit size to transmit the first transport channel and the second transport channel,

a second de-rate matcher for de-rate matching the de-multiplexed data of the second transport channel;
a buffer for buffering the de-rate matched data of the second transport channel,
a second channel decoder for channel decoding the de-rate matched data of the second transport channel; and

wherein if the second transport channel is retransmitted, and the de-rate matched data of the second transport channel is combined previous transmitted data of second transport channel being in the buffer.

**33.** The apparatus of claim 32, wherein the code channel set represents combinations of spreading factors and physical channel bit sizes.

**34.** The apparatus of claim 32, wherein the data of the second transport channel is down sized according to one of determined step size or step ratio.

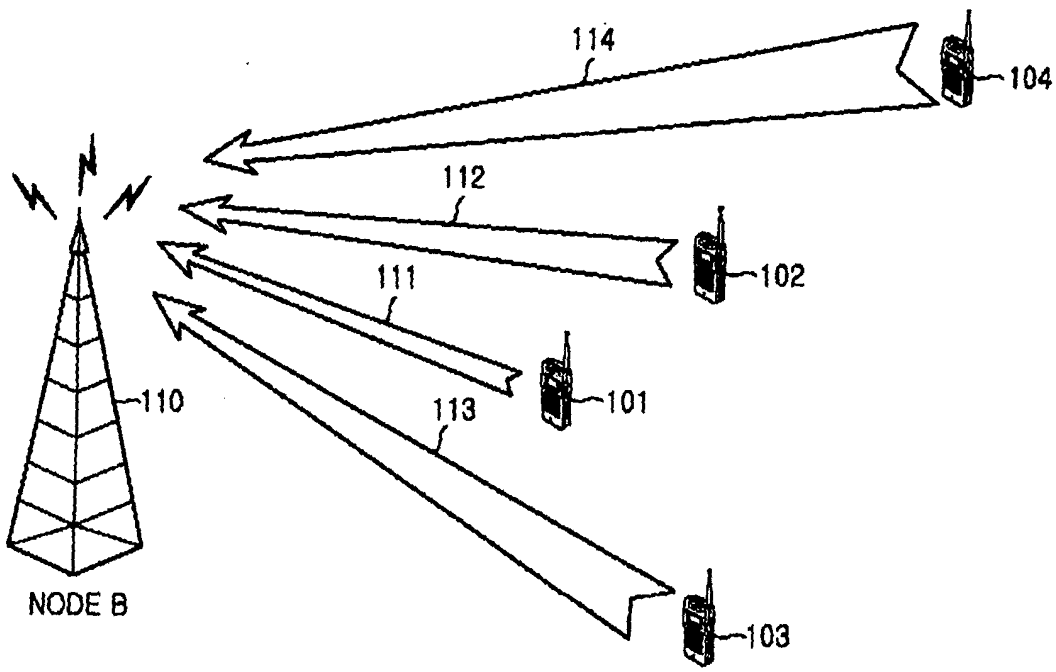


FIG.1

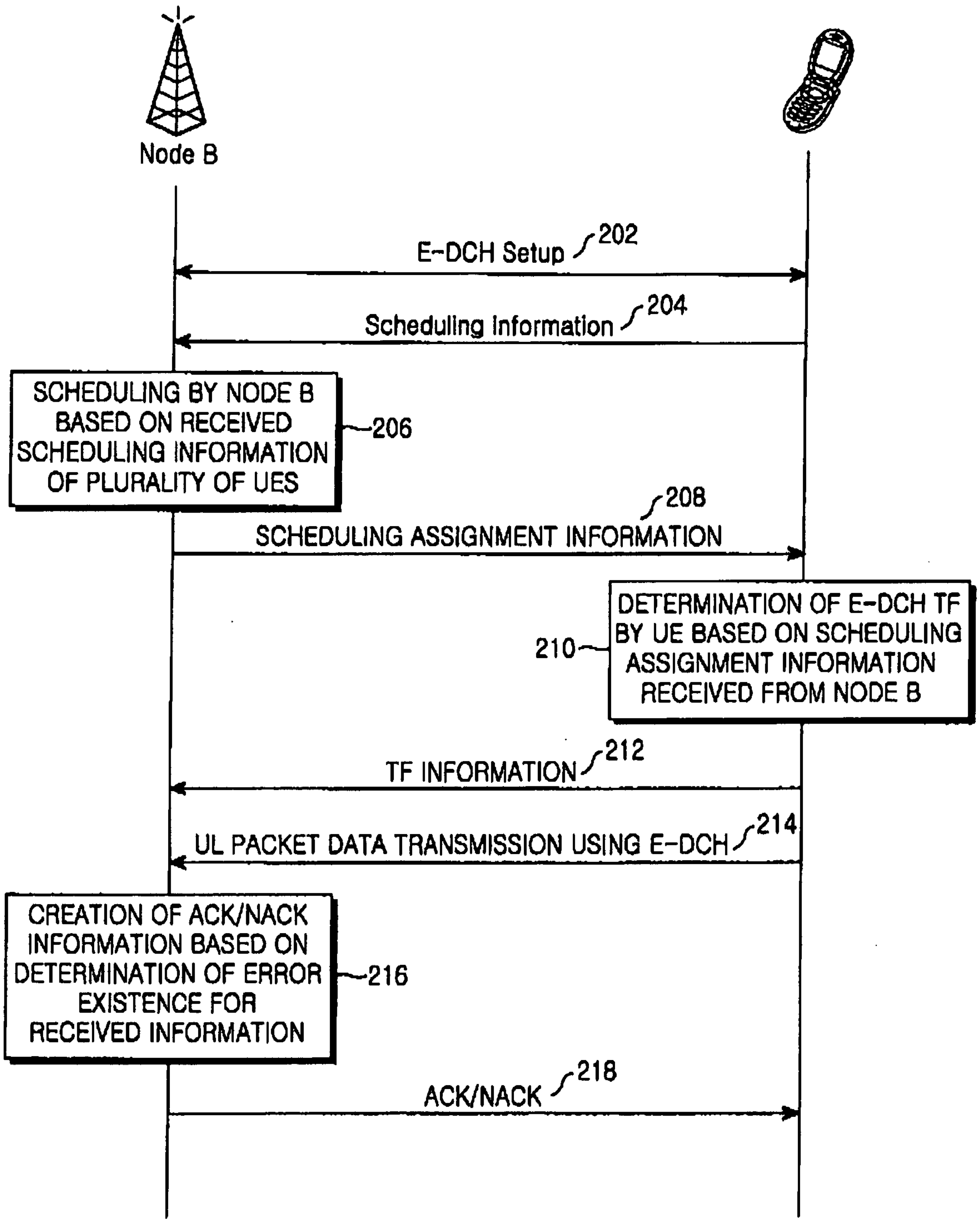
Node B
E-DCH Setup
202
Scheduling Information
204
SCHEDULING BY NODE B BASED ON RECEIVED SCHEDULING INFORMATION OF PLURALITY OF UES
206
208
SCHEDULING ASSIGNMENT INFORMATION
DETERMINATION OF E-DCH TF BY UE BASED ON SCHEDULING ASSIGNMENT INFORMATION RECEIVED FROM NODE B
210
TF INFORMATION
212
UL PACKET DATA TRANSMISSION USING E-DCH
214
CREATION OF ACK/NACK INFORMATION BASED ON DETERMINATION OF ERROR EXISTENCE FOR RECEIVED INFORMATION
216
ACK/NACK
218

FIG.2

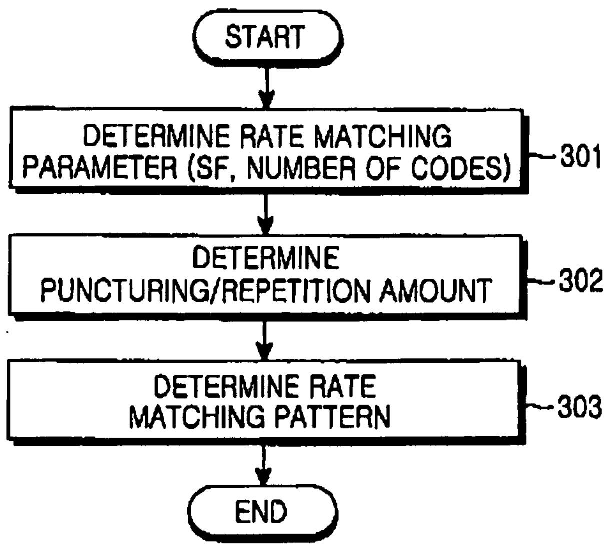
START
DETERMINE RATE MATCHING PARAMETER (SF, NUMBER OF CODES)
301
DETERMINE PUNCTURING/REPETITION AMOUNT
302
DETERMINE RATE MATCHING PATTERN
303
END

FIG.3

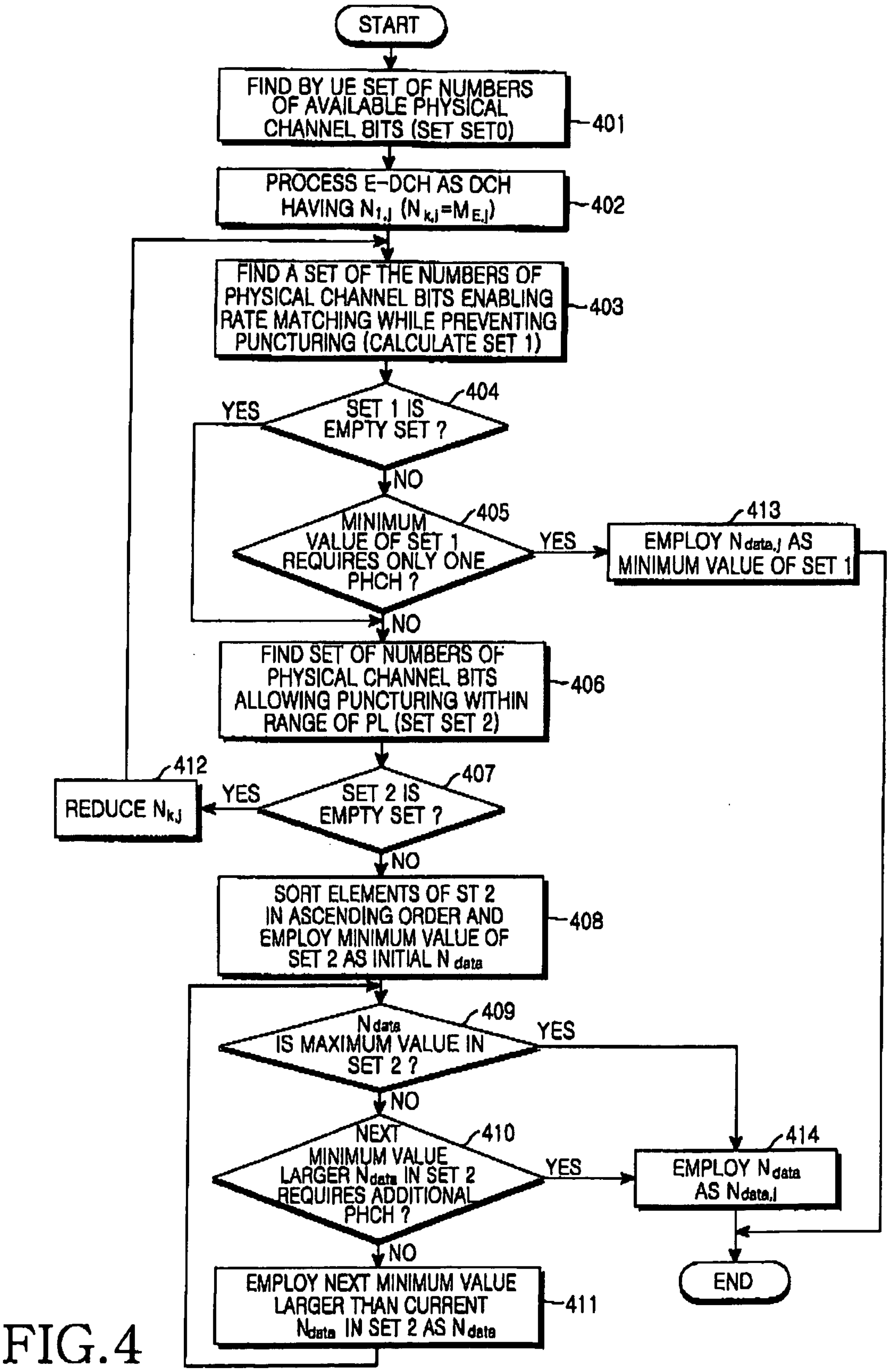
START
FIND BY UE SET OF NUMBERS OF AVAILABLE PHYSICAL CHANNEL BITS (SET SET0)
401
PROCESS E-DCH AS DCH HAVING $N_{1,j}$ ($N_{k,j}$=$M_{E,j}$)
402
FIND A SET OF THE NUMBERS OF PHYSICAL CHANNEL BITS ENABLING RATE MATCHING WHILE PREVENTING PUNCTURING (CALCULATE SET 1)
403
SET 1 IS EMPTY SET ?
404
YES
NO
MINIMUM VALUE OF SET 1 REQUIRES ONLY ONE PHCH ?
405
YES
EMPLOY $N_{data,j}$ AS MINIMUM VALUE OF SET 1
413
NO
FIND SET OF NUMBERS OF PHYSICAL CHANNEL BITS ALLOWING PUNCTURING WITHIN RANGE OF PL (SET SET 2)
406
SET 2 IS EMPTY SET ?
407
YES
REDUCE $N_{k,j}$
412
NO
SORT ELEMENTS OF ST 2 IN ASCENDING ORDER AND EMPLOY MINIMUM VALUE OF SET 2 AS INITIAL $N_{data}$
408
$N_{data}$ IS MAXIMUM VALUE IN SET 2 ?
409
YES
NO
NEXT MINIMUM VALUE LARGER $N_{data}$ IN SET 2 REQUIRES ADDITIONAL PHCH ?
410
YES
EMPLOY $N_{data}$ AS $N_{data,j}$
414
NO
EMPLOY NEXT MINIMUM VALUE LARGER THAN CURRENT $N_{data}$ IN SET 2 AS $N_{data}$
411
END

FIG.4

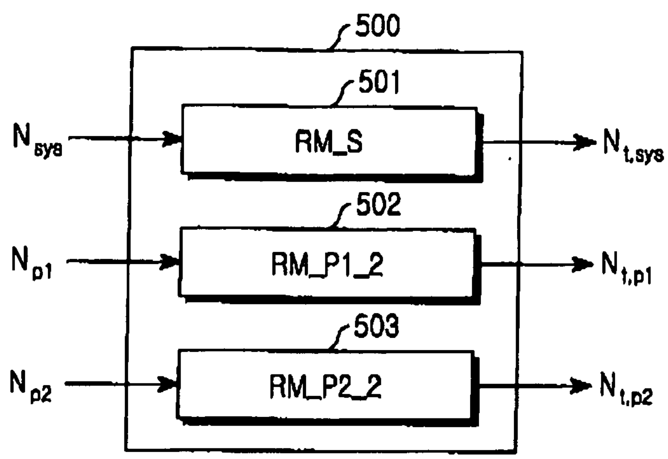


FIG.5

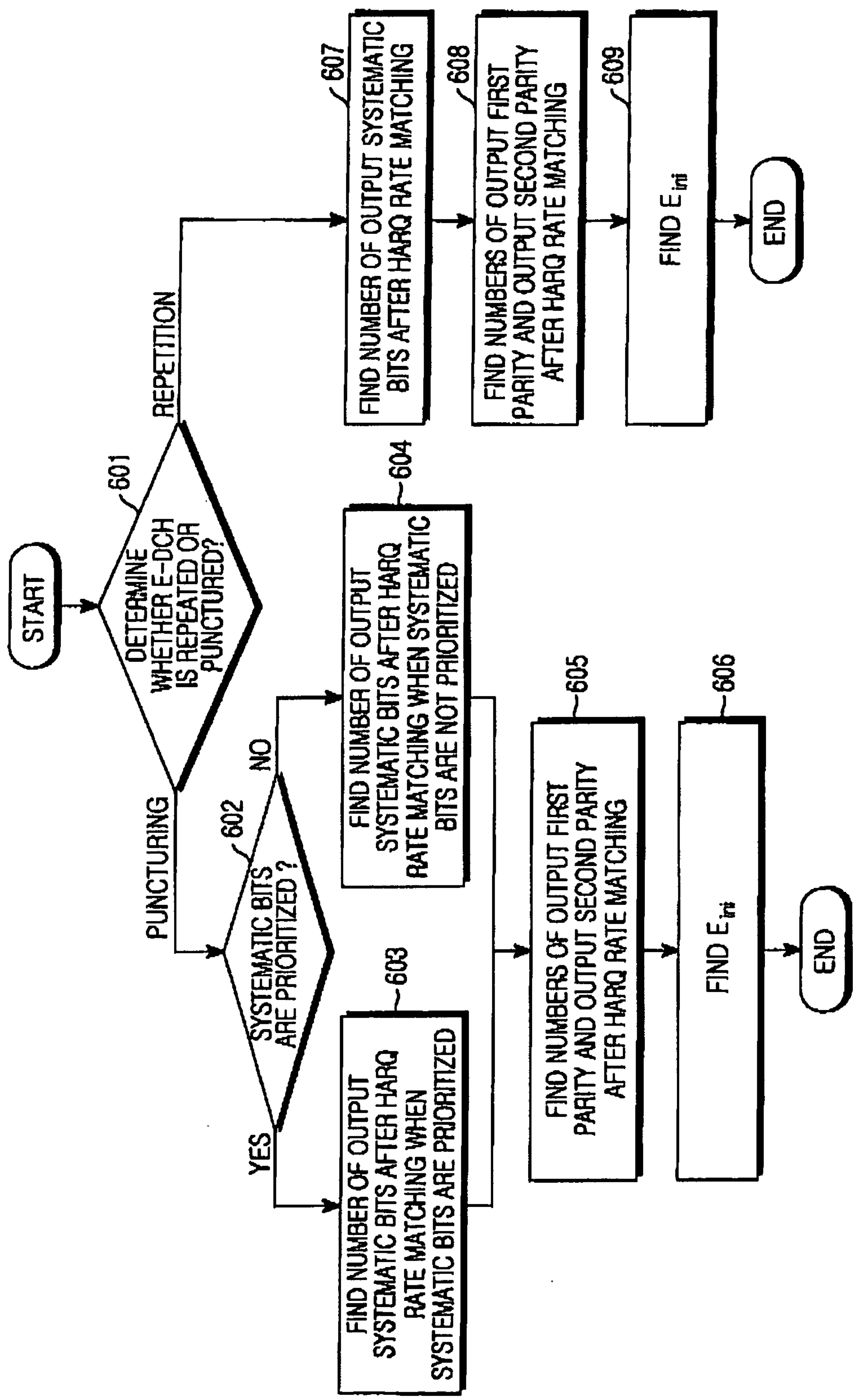
START
DETERMINE WHETHER E-DCH IS REPEATED OR PUNCTURED?
601
PUNCTURING
REPETITION
SYSTEMATIC BITS ARE PRIORITIZED ?
602
YES
NO
FIND NUMBER OF OUTPUT SYSTEMATIC BITS AFTER HARQ RATE MATCHING WHEN SYSTEMATIC BITS ARE PRIORITIZED
603
FIND NUMBER OF OUTPUT SYSTEMATIC BITS AFTER HARQ RATE MATCHING WHEN SYSTEMATIC BITS ARE NOT PRIORITIZED
604
FIND NUMBERS OF OUTPUT FIRST PARITY AND OUTPUT SECOND PARITY AFTER HARQ RATE MATCHING
605
FIND $E_{ini}$
606
END
FIND NUMBER OF OUTPUT SYSTEMATIC BITS AFTER HARQ RATE MATCHING
607
FIND NUMBERS OF OUTPUT FIRST PARITY AND OUTPUT SECOND PARITY AFTER HARQ RATE MATCHING
608
FIND $E_{ini}$
609
END

FIG.6

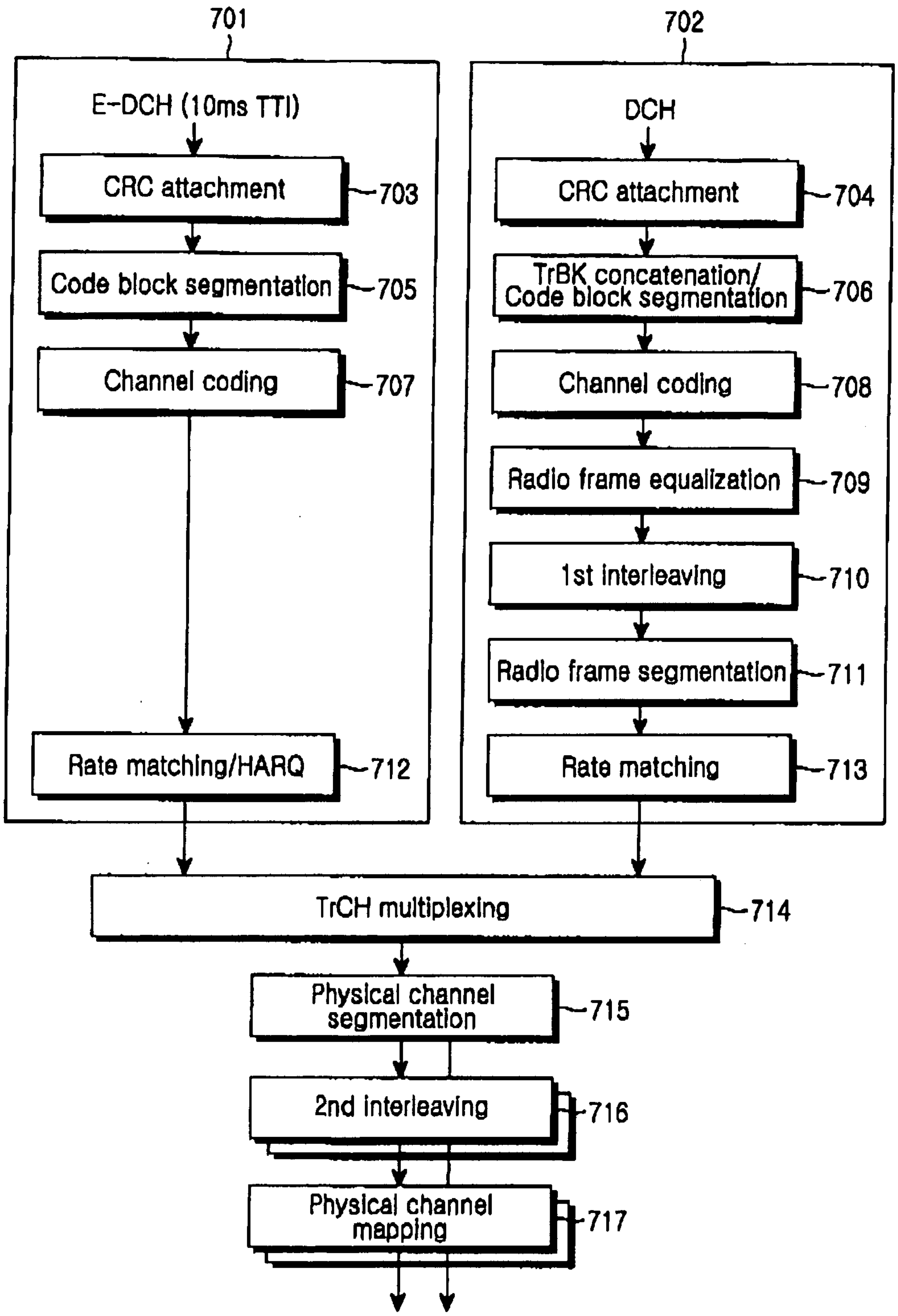
701
702
E-DCH (10ms TTI)
CRC attachment
703
Code block segmentation
705
Channel coding
707
Rate matching/HARQ
712
DCH
CRC attachment
704
TrBK concatenation/
Code block segmentation
706
Channel coding
708
Radio frame equalization
709
1st interleaving
710
Radio frame segmentation
711
Rate matching
713
TrCH multiplexing
714
Physical channel
segmentation
715
2nd interleaving
716
Physical channel
mapping
717

FIG.7

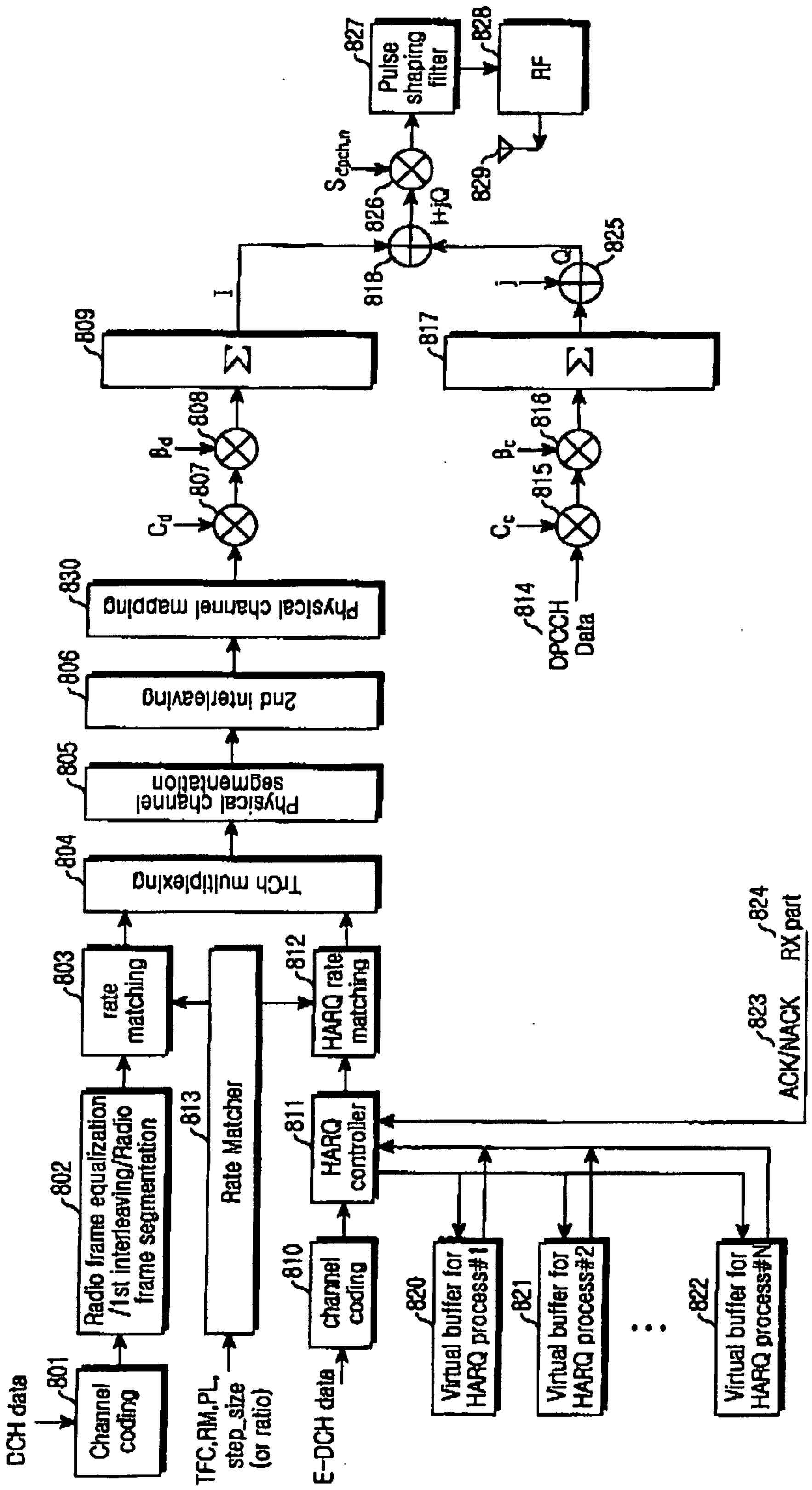
DCH data
801
Channel coding
802
Radio frame equalization /1st interleaving/Radio frame segmentation
803
rate matching
804
TrCh multiplexing
805
Physical channel segmentation
806
2nd interleaving
830
Physical channel mapping
$C_d$
807
$\beta_d$
808
809
Σ
I
818
826
I+jQ
$S_{dpch,n}$
827
Pulse shaping filter
828
RF
829
TFC,RM,PL, step_size (or ratio)
813
Rate Matcher
E-DCH data
810
channel coding
811
HARQ controller
812
HARQ rate matching
820
Virtual buffer for HARQ process#1
821
Virtual buffer for HARQ process#2
822
Virtual buffer for HARQ process#N
823
ACK/NACK
824
RX part
814
DPCCH Data
$C_c$
815
$\beta_c$
816
817
Σ
j
Q
825

FIG.8

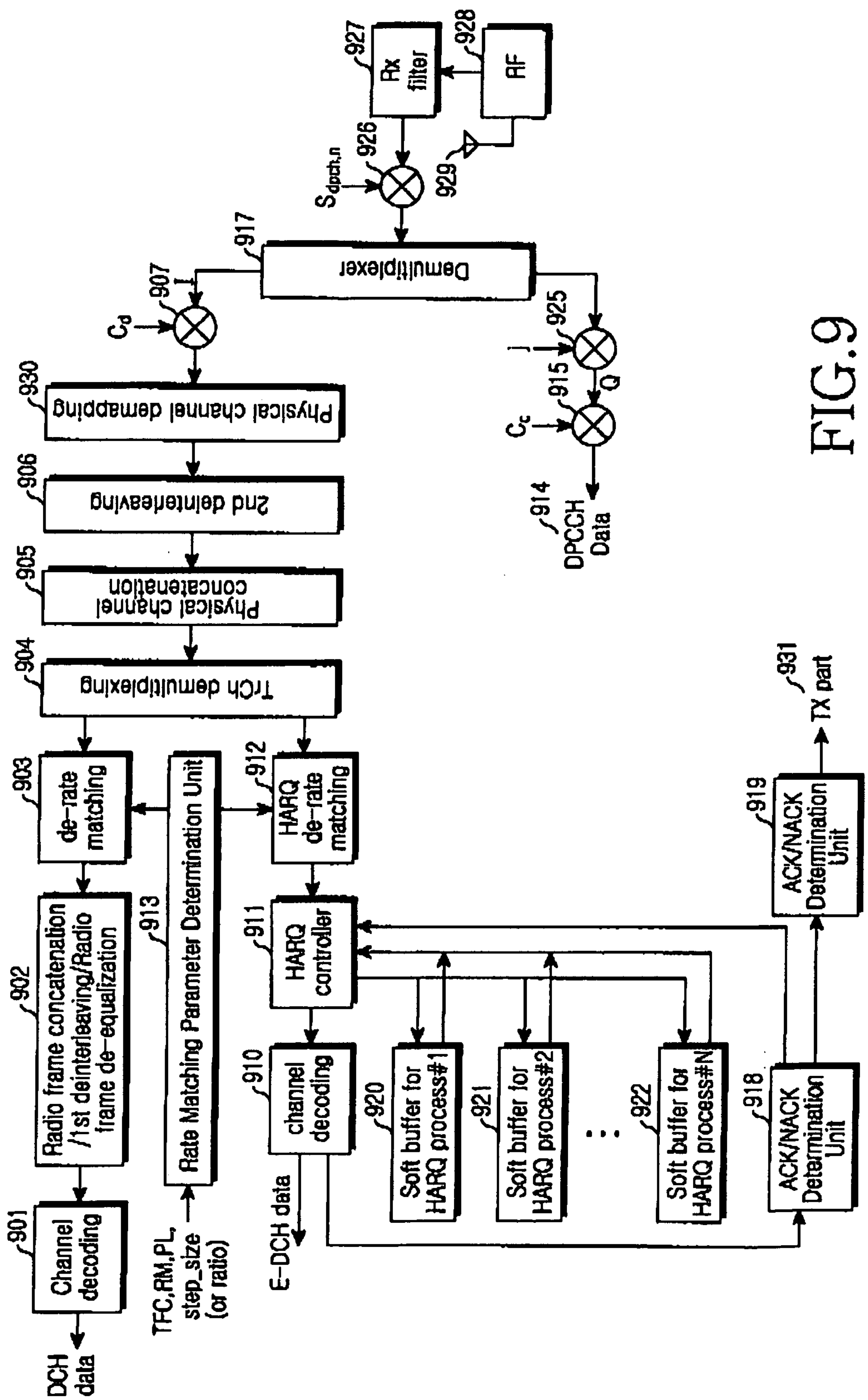
Rx filter
RF
Demultiplexer
Physical channel demapping
2nd deinterleaving
Physical channel concatenation
TrCh demultiplexing
de-rate matching
Rate Matching Parameter Determination Unit
HARQ de-rate matching
Radio frame concatenation /1st deinterleaving/Radio frame de-equalization
HARQ controller
Channel decoding
channel decoding
Soft buffer for HARQ process#1
Soft buffer for HARQ process#2
Soft buffer for HARQ process#N
ACK/NACK Determination Unit
ACK/NACK Determination Unit
DCH data
E-DCH data
TFC,RM,PL, step_size (or ratio)
DPCCH Data
TX part
901
902
903
904
905
906
907
910
911
912
913
914
915
917
918
919
920
921
922
925
926
927
928
929
930
931

FIG.9